# EUROPEAN PATENT APPLICATION

(11) **EP 2 716 936 A1**
(43) Date of publication of application: **09.04.2014**
(21) Application number: 12792015.5
(22) Date of filing: 05.04.2012
(51) Int. Cl.: F16H 37/02, F16H 48/11

(54) **TRANSMISSION MECHANISM FOR FRICTION PLANETARY CONTINUOUS VARIABLE TRANSMISSION**

(30) Priority: 03.06.2011 CN 201110148704; 28.06.2011 CN 201110176866; 08.11.2011 CN 201110349475; 17.01.2012 CN 201210013336
(71) Applicant: Guo, Keya, Guangdong 523660 (CN)
(72) Inventor: Guo, Keya, Guangdong 523660 (CN)
(74) Representative: Hellmich, Wolfgang
(86) International application number: PCT/CN2012/000438
(87) International publication number: WO 2012/163079

(57) **Abstract**

The present invention discloses a planetary friction type continuously variable transmission (CVT) mechanism, which comprises a planet carrier, at least one planetary line, a sun gear set and a transmission unit, wherein the planetary line includes an outer planetary gear, a planet shaft, an inner planetary gear set and a rotary arm; the inner planetary gear set includes an inner planetary gear, a first planetary bevel gear and a second planetary bevel gear; the sun gear set includes a first bevel gear and a second bevel gear; the transmission unit is engaged with a transmission element in the planetary line; the inner planetary gear set is movably connected with the rotary arm; the rotary arm and the outer planetary gear are movably connected with the planet carrier through the planet shaft; the outer planetary gear is engaged with the inner planetary gear; and power is transmitted between the sun gear set and the inner planetary gear set through the engagement of conical surfaces, so that the continuous variable transmission (CVT) can be achieved. The planetary friction type CVT mechanism provided by the present invention can be applied in the field of the transmission of various vehicles, machines and the like.

## Description

### FIELD OF THE INVENTION

The present invention relates to the technical field of planetary gear drive and planetary friction drive, in particular to a planetary friction type continuously variable transmission (CVT) mechanism.

### BACKGROUND OF THE INVENTION

In the last ten years, the CVT technology has made great progress and is currently widely used in the field of low-power vehicles. There are various types of CVTs, in which the belt drive type and the traction drive type have been applied in vehicles and are configured to transmit power via friction force. In addition, the fluid type and the dynamic type are currently only applied in a small number of special vehicles due to low transmission efficiency.

As the belt drive type CVT mainly achieves the stepless variation of the speed ratio via a driver and a follower with variable diameter and a metal belt, the belt drive type CVT has high transmission efficiency and wide speed range and can achieve the CVT within a relatively wide range, and hence the optimum matching of the operating conditions of a transmission mechanism and an engine can be achieved, and consequently the fuel economy of the whole vehicle can be improved. However, due to the limitation of the material of the metal belt and technology currently, the production cost can be very high. As the CVT cannot achieve zero-crossing output, most CVTs are equipped with hydraulic converters and planetary gear mechanisms to widen the range of the transmission ratio and achieve the zero-crossing output. The traction drive type CVT includes cone roller type, planetary friction type and the like. Although the transmission mode of the cone roller type CVT is different from that of the belt drive type CVT, the zero-crossing output cannot be achieved as well due to the limitation of the structure thereof and can only be achieved via a planetary gear mechanism.

The planetary CVT in the prior art mostly comprises planetary friction gears with different shapes and ring gears and sun gears which achieve friction transmission with the planetary friction gears. The working radius of the planetary friction gears is continuously changed via the axial movement of the ring gears, and hence the continuously variable transmission ratio can be obtained. Although the planetary CVT of this type has simple structure, as the variable working radius of the planetary friction gears is relatively small and the transmission mode of the planetary CVT in a planetary mechanism is limited, the planetary CVT has the defects of small variation range of the transmission ratio, small transmission power and the like, and hence the development and the application range of the planetary CVT can be restricted.

As is known to everyone, the traditional planetary gear mechanism is widely applied in various variation fields due to the advantages of simple structure, high transmission efficiency, large transmission power and the like. In the application of an automobile transmission, in order to improve the variation range of the transmission ratio thereof and satisfy the transmission requirement of vehicles under various road conditions, the transmission ratio with wide variation range can be achieved by adoption of a plurality of planetary gear mechanisms and by the mutual matching of a plurality of clutches and brakes. However, the automobile transmission has very complex structure and control method and high cost.

A new method is adopted to improve the technology of the transmission with the above advantages and will certainly have good application value in the field.

### SUMMARY OF THE INVENTION

The technical problem to be solved by the present invention is to provide a planetary friction type CVT mechanism and overcome the defects of complex structure and high production cost as the planetary gear transmission in the prior art can only achieve the transmission ratio with wide variation range via the mutual matching of a plurality of clutches and brakes.

In order to solve the above technical problems, the present invention adopts the technical proposal that:
The present invention discloses a planetary friction type CVT mechanism, which comprises a planet carrier, at least one planetary line, a sun gear set and a transmission unit, wherein the planetary line includes an outer planetary gear, a planet shaft, an inner planetary gear set and a rotary arm; the inner planetary gear set includes an inner planetary gear, a first planetary bevel gear and a second planetary bevel gear; the sun gear set includes a first bevel gear and a second bevel gear;
the outer planetary gear is respectively engaged with the transmission unit and the inner planetary gear;
the inner planetary gear set is movably connected with the rotary arm; the rotary arm and the outer planetary gear are movably connected with the planet carrier through the planet shaft;
a conical surface of the first bevel gear makes contact with a conical surface of the first planetary bevel gear and meanwhile a conical surface of the second bevel gear makes contact with a conical surface of the second planetary bevel gear; the first bevel gear is movably connected with the second bevel gear;
the first planetary bevel gear, the inner planetary gear and the second planetary bevel gear are adjacently arranged in sequence and mutually connected; or alternatively, the first planetary bevel gear, the second planetary bevel gear and the inner planetary gear are adjacently arranged in sequence and mutually connected; or alternatively, the inner planetary gear, the first planetary bevel gear and the second planetary bevel gear are adjacently arranged in sequence and mutually connected.

In the planetary friction type CVT mechanism, the planet carrier is respectively movably connected with the sun gear set and the transmission unit; or alternatively, the sun gear set is respectively movably connected with the planet carrier and the transmission unit; or alternatively, the transmission unit is respectively movably connected with the planet carrier and the sun gear set; or alternatively the planet carrier is movably connected with the sun gear set; or alternatively, the planet carrier is movably connected with the transmission unit; or alternatively, the transmission unit is movably connected with the sun gear set.

In the planetary friction type CVT mechanism, the first bevel gear is movably connected with the second bevel gear through an input shaft.

In the planetary friction type CVT mechanism, the planet carrier or the transmission unit is fixedly connected with an output shaft.

In the planetary friction type CVT mechanism, the planet shaft is fixedly connected with the planet carrier and movably connected with the outer planetary gear and the rotary arm; or alternatively, the planet shaft is fixedly connected with the planet carrier and movably connected with the outer planetary gear, and the rotary arm is movably connected with the planet shaft and the outer planetary gear; or alternatively, the planet shaft is fixedly connected with the rotary arm and movably connected with the outer planetary gear and the planet carrier; or alternatively, the planet shaft is fixedly connected with the outer planetary gear and movably connected with the rotary arm and the planet carrier.

In the planetary friction type CVT mechanism, the first planetary bevel gear, the inner planetary gear and the second planetary bevel gear are adjacently arranged in sequence and fixedly connected through a second planet shaft; or alternatively, the first planetary bevel gear, the second planetary bevel gear and the inner planetary gear are adjacently arranged in sequence and fixedly connected through the second planet shaft; or alternatively, the inner planetary gear, the first planetary bevel gear and the second planetary bevel gear are adjacently arranged in sequence and fixedly connected through the second planet shaft; or alternatively, the first planetary bevel gear and the second planetary bevel gear are fixedly connected with the second planet shaft which runs through the inner planetary gear; or alternatively, the inner planetary gear is fixedly connected with the second planet shaft; a third planet shaft runs through the second planet shaft; and the first planetary bevel gear and the second planetary bevel gear are fixedly connected with the third planet shaft.

In the planetary friction type CVT mechanism, the inner planetary gear set is movably connected with the rotary arm through the second planet shaft or the third planet shaft.

In the planetary friction type CVT mechanism, the transmission unit is configured to be a ring gear or a sun gear; and the ring gear or the sun gear is engaged with the outer planetary gear.

In the planetary friction type CVT mechanism, the planetary line further includes a planetary gear, in which the planetary gear is respectively engaged with the outer planetary gear and the inner planetary gear and movably connected with the rotary arm; or alternatively, the planetary gear is respectively engaged with the outer planetary gear and the transmission unit and movably connected with the planet carrier.

In the planetary friction type CVT mechanism, the planetary gear is movably connected with the rotary arm through a fourth planet shaft; or alternatively, the planetary gear is movably connected with the planet carrier through the fourth planet shaft.

In the planetary friction type CVT mechanism, the outer planetary gear is engaged with the ring gear or the sun gear; or alternatively, the planetary gear is engaged with the ring gear; or alternatively, the planetary gear is engaged with the sun gear.

In the planetary friction type CVT mechanism, the planetary line further includes a second outer planetary gear, in which the second outer planetary gear is fixedly connected with the outer planetary gear and engaged with the transmission unit, and the outer planetary gear is engaged with the inner planetary gear.

In the planetary friction type CVT mechanism, the second outer planetary gear is fixedly connected with the outer planetary gear through a fifth planet shaft.

In the planetary friction type CVT mechanism, the ring gear or the sun gear is engaged with the second outer planetary gear.

In the planetary friction type CVT mechanism, the planetary line further includes a third outer planetary gear, in which the third outer planetary gear is fixedly connected with the outer planetary gear and engaged with the transmission unit, and the outer planetary gear is engaged with the planetary gear; or alternatively, the third outer planetary gear is engaged with the planetary gear, and the outer planetary gear is engaged with the inner planetary gear.

In the planetary friction type CVT mechanism, the third outer planetary gear is fixedly connected with the outer planetary gear through a sixth planet shaft.

In the planetary friction type CVT mechanism, the ring gear or the sun gear is engaged with the third outer planetary gear.

In the planetary friction type CVT mechanism, the planetary friction type CVT mechanism further comprises a first regulator and a second regulator; the first bevel gear, the first regulator and the second bevel gear are connected with each other in sequence; and the rotary arm, the second regulator and the planet carrier are connected with each other in sequence.

In the planetary friction type CVT mechanism, the first regulator is configured to be a hydraulic cylinder or at least one pressure spring; the first bevel gear, the hydraulic cylinder and the second bevel gear are connected with each other in sequence; or alternatively, the first bevel gear, the pressure spring and the second bevel gear are connected with each other in sequence.

In the planetary friction type CVT mechanism, the second regulator is configured to be at least one torsion spring, at least one tension spring or at least one second hydraulic cylinder; the rotary arm, the torsion spring and the planet carrier are connected with each other in sequence; or alternatively, the rotary arm, the tension spring and the planet carrier are connected with each other in sequence; or alternatively, the rotary arm, the second hydraulic cylinder and the planet carrier are connected with each other in sequence.

In the planetary friction type CVT mechanism, the planet carrier, the sun gear set and the transmission unit are elements for connection and transmission with the outside world, in which any one can be taken as an input element and connected with a power source or connected with the power source through a clutch; after the input element is determined, any one of the other two can be taken as an output element or connected with a differential; and after the output element is determined, the last one is taken as a control element and fixed or fixed through a brake.

In the planetary friction type CVT mechanism, the planetary friction type CVT mechanism further comprises a second ring gear, a second planet carrier, a second sun gear and at least one second planetary gear, in which the second planetary gear is movably connected with the second planet carrier and respectively engaged with the second sun gear and the second ring gear; the second ring gear and the second planet carrier are fixedly connected with the transmission unit, the sun gear set or the planet carrier; or alternatively, the second ring gear and the second sun gear are fixedly connected with the transmission unit, the sun gear set or the planet carrier; or alternatively, the second planet carrier and the second sun gear are fixedly connected with the transmission unit, the sun gear set or the planet carrier.

In the planetary friction type CVT mechanism, the second planetary gear is movably connected with the second planet carrier through a seventh planet shaft.

In the planetary friction type CVT mechanism, a second output shaft is fixedly connected with the second sun gear, the second ring gear or the second planet carrier.

In the planetary friction type CVT mechanism, the second ring gear is fixedly connected with the ring gear, the sun gear, the first bevel gear, the second bevel gear or the input shaft.

In the planetary friction type CVT mechanism, the second planet carrier is fixedly connected with the ring gear, the sun gear, the first bevel gear, the second bevel gear or the input shaft.

In the planetary friction type CVT mechanism, the second sun gear is fixedly connected with the ring gear, the sun gear, the first bevel gear, the second bevel gear or the input shaft.

In the planetary friction type CVT mechanism, the second planet carrier, the second sun gear or the second ring gear is taken as an output element and connected with the differential or connected with the differential through the second output shaft.

In the planetary friction type CVT mechanism, the planetary friction type CVT mechanism further comprises a third ring gear, a third planet carrier, a third sun gear and at least one third planetary gear, in which the third planetary gear is movably connected with the third planet carrier and respectively engaged with the third sun gear and the third ring gear; the third ring gear and the third planet carrier are fixedly connected with the second ring gear, the second sun gear or the second planet carrier; or alternatively, the third ring gear and the third sun gear are fixedly connected with the second ring gear, the second sun gear or the second planet carrier; or alternatively, the third planet carrier and the third sun gear are fixedly connected with the second ring gear, the second sun gear or the second planet carrier.

In the planetary friction type CVT mechanism, the third planetary gear is movably connected with the third planet carrier through an eighth planet shaft.

In the planetary friction type CVT mechanism, a third output shaft is fixedly connected with the third sun gear, the third planet carrier or the third ring gear.

In the planetary friction type CVT mechanism, the third planet carrier, the third sun gear or the third ring gear is taken as an output element and connected with the differential or connected with the differential through the third output shaft.

In order to solve the above technical problem, another technical proposal adopted by the present invention is that:
The present invention discloses a planetary friction type CVT mechanism, which comprises a planet carrier, at least one planetary line, a sun gear set and a transmission unit, wherein the planetary line includes a first outer planetary gear, a second outer planetary gear, a planet shaft, a first inner planetary gear set, a second inner planetary gear set and a rotary arm; the first inner planetary gear set includes a first inner planetary gear, a first planetary bevel gear and a second planetary bevel gear; the second inner planetary gear set includes a second inner planetary gear, a third planetary bevel gear and a fourth planetary bevel gear; the sun gear set includes a first bevel gear and a second bevel gear; the transmission unit includes a third bevel gear and a fourth bevel gear;
a conical surface of the first bevel gear makes contact with a conical surface of the first planetary bevel gear and meanwhile a conical surface of the second bevel gear makes contact with a conical surface of the second planetary bevel gear; the first bevel gear is movably connected with the second bevel gear;
a conical surface of the third bevel gear makes contact with a conical surface of the third planetary bevel gear and meanwhile a conical surface of the fourth bevel gear makes contact with a conical surface of the fourth planetary bevel gear; the third bevel gear is movably connected with the fourth bevel gear;
the first inner planetary gear set and the second inner planetary gear set are respectively movably connected with the rotary arm; the first outer planetary gear is fixedly connected with the second outer planetary gear; the first outer planetary gear, the second outer planetary gear and the rotary arm are movably connected with the planet carrier through the planet shaft; the first outer planetary gear is engaged with the first inner planetary gear; the second outer planetary gear is engaged with the second inner planetary gear;
the first planetary bevel gear, the first inner planetary gear and the second planetary bevel gear are adjacently arranged in sequence and mutually connected; or alternatively, the first planetary bevel gear, the second planetary bevel gear and the first inner planetary gear are adjacently arranged in sequence and mutually connected; or alternatively, the first inner planetary gear, the first planetary bevel gear and the second planetary bevel gear are adjacently arranged in sequence and mutually connected;
the third planetary bevel gear, the second inner planetary gear and the fourth planetary bevel gear are adjacently arranged in sequence and mutually connected; or alternatively, the third planetary bevel gear, the fourth planetary bevel gear and the second inner planetary gear are adjacently arranged in sequence and mutually connected; or alternatively, the second inner planetary gear, the third planetary bevel gear and the fourth planetary bevel gear are adjacently arranged in sequence and mutually connected.

In the planetary friction type CVT mechanism, the first outer planetary gear and the second outer planetary gear may also be configured to be an outer planetary gear; the outer planetary gear is respectively engaged with the first inner planetary gear and the second inner planetary gear; and the outer planetary gear and the rotary arm are movably connected with the planet carrier through the planet shaft.

In the planetary friction type CVT mechanism, the planet carrier is respectively movably connected with the sun gear set and the transmission unit; or alternatively, the sun gear set is respectively movably connected with the planet carrier and the transmission unit; or alternatively, the transmission unit is respectively movably connected with the planet carrier and the sun gear set; or alternatively, the planet carrier is movably connected with the sun gear set; or alternatively, the planet carrier is movably connected with the transmission unit; or alternatively, the transmission unit is movably connected with the sun gear set.

In the planetary friction type CVT mechanism, the first bevel gear is movably connected with the second bevel gear through an input shaft.

In the planetary friction type CVT mechanism, the third bevel gear is movably connected with the fourth bevel gear through an output shaft.

In the planetary friction type CVT mechanism, the first planetary bevel gear, the first inner planetary gear and the second planetary bevel gear are adjacently arranged in sequence and fixedly connected through a second planet shaft; or alternatively, the first planetary bevel gear, the second planetary bevel gear and the first inner planetary gear are adjacently arranged in sequence and fixedly connected through the second planet shaft; or alternatively, the first inner planetary gear, the first planetary bevel gear and the second planetary bevel gear are adjacently arranged in sequence and fixedly connected through the second planet shaft; or alternatively, the first planetary bevel gear and the second planetary bevel gear are fixedly connected with the second planet shaft which runs through the first inner planetary gear; or alternatively, the first planetary gear is fixedly connected with the second planet shaft; a third planet shaft runs through the second planet shaft; and the first planetary bevel gear and the second planetary bevel gear are fixedly connected with the third planet shaft.

In the planetary friction type CVT mechanism, the first inner planetary gear set is movably connected with the rotary arm through the second planet shaft or the third planet shaft.

In the planetary friction type CVT mechanism, the third planetary bevel gear, the second inner planetary gear and the fourth planetary bevel gear are adjacently arranged in sequence and fixedly connected through a fourth planet shaft; or alternatively, the third planetary bevel gear, the fourth planetary bevel gear and the second inner planetary gear are adjacently arranged in sequence and fixedly connected through the fourth planet shaft; or alternatively, the second inner planetary gear, the third planetary bevel gear and the fourth planetary bevel gear are adjacently arranged in sequence and fixedly connected through the fourth planet shaft; or alternatively, the third planetary bevel gear and the fourth planetary bevel gear are fixedly connected with the fourth planet shaft which runs through the second inner planetary gear; or alternatively, the second inner planetary gear is fixedly connected with the fourth planet shaft; a fifth planet shaft runs through the fourth planet shaft; and the third planetary bevel gear and the fourth planetary bevel gear are fixedly connected with the fifth planet shaft.

In the planetary friction type CVT mechanism, the second inner planetary gear set is movably connected with the rotary arm through the fourth planet shaft or the fifth planet shaft.

In the planetary friction type CVT mechanism, the planetary friction type CVT mechanism further comprises a first regulator and a second regulator; the first bevel gear, the first regulator and the second bevel gear are connected with each other in sequence; and the third bevel gear, the second regulator and the fourth bevel gear are connected with each other in sequence.

In the planetary friction type CVT mechanism, the first regulator is configured to be a hydraulic cylinder or at least one pressure spring; the first bevel gear, the hydraulic cylinder and the second bevel gear are connected with each other in sequence; or alternatively, the first bevel gear, the pressure spring and the second bevel gear are connected with each other in sequence.

In the planetary friction type CVT mechanism, the second regulator is configured to be a second hydraulic cylinder or at least one second pressure spring; the third bevel gear, the second hydraulic cylinder and the fourth bevel gear are connected with each other in sequence; or alternatively, the third bevel gear, the second pressure spring and the fourth bevel gear are connected with each other in sequence.

In the planetary friction type CVT mechanism, the planet carrier, the sun gear set and the transmission unit are taken as elements for connection and transmission with the outside world, in which any one can be taken as an input element and connected with a power source or connected with the power source through a clutch; after the input element is determined, any one of the other two can be taken as an output element or connected with a differential; and after the output element is determined, the last one is taken as a control element and fixed or fixed through a brake.

In the planetary friction type CVT mechanism, the planetary friction type CVT mechanism further comprises a second ring gear, a second planet carrier, a second sun gear and at least one second planetary gear, in which the second planetary gear is movably connected with the second planet carrier and respectively engaged with the second sun gear and the second ring gear; the second ring gear and the second planet carrier are fixedly connected with the transmission unit, the sun gear set or the planet carrier; or alternatively, the second ring gear and the second sun gear are fixedly connected with the transmission unit, the sun gear set or the planet carrier; or alternatively, the second planet carrier and the second sun gear are fixedly connected with the transmission unit, the sun gear set or the planet carrier.

In the planetary friction type CVT mechanism, the second planetary gear is movably connected with the second planet carrier through a sixth planet shaft.

In the planetary friction type CVT mechanism, a second output shaft is fixedly connected with the second sun gear, the second ring gear or the second planet carrier.

In the planetary friction type CVT mechanism, the second ring gear is fixedly connected with the first bevel gear, the second bevel gear, the input shaft, the third bevel gear, the fourth bevel gear or the output shaft.

In the planetary friction type CVT mechanism, the second planet carrier is fixedly connected with the first bevel gear, the second bevel gear, the input shaft, the third bevel gear, the fourth bevel gear or the output shaft.

In the planetary friction type CVT mechanism, the second sun gear is fixedly connected with the first bevel gear, the second bevel gear, the input shaft, the third bevel gear, the fourth bevel gear or the output shaft.

In the planetary friction type CVT mechanism, the second planet carrier, the second sun gear and the second ring gear are taken as output elements and connected with the differential or connected with the differential through the second output shaft.

In the planetary friction type CVT mechanism, the planetary friction type CVT mechanism further comprises a third ring gear, a third planet carrier, a third sun gear and at least one third planetary gear, in which the third planetary gear is movably connected with the third planet carrier and respectively connected with the third sun gear and the third ring gear; the third ring gear and the third planet carrier are fixedly connected with the second ring gear, the second sun gear or the second planet carrier; or alternatively, the third ring gear and the third sun gear are fixedly connected with the second ring gear, the second sun gear or the second planet carrier; or alternatively, the third planet carrier and the third sun gear are fixedly connected with the second ring gear, the second sun gear or the second planet carrier.

In the planetary friction type CVT mechanism, the third planetary gear is movably connected with the third planet carrier through a seventh planet shaft.

In the planetary friction type CVT mechanism, a third output shaft is fixedly connected with the third sun gear, the third planet carrier or the third ring gear.

In the planetary friction type CVT mechanism, the third planet carrier, the third sun gear or the third ring gear is taken as an output element and connected with the differential or connected with the differential through the third output shaft.

The planetary friction type CVT mechanism provided by the present invention has the advantages that: the planetary friction type CVT mechanism can obtain the transmission ratio with wide variation range, can still maintain good transmission effect in the case of zero-crossing transmission, obviously overcomes the defects in the traditional CVT technology, improves the variation range of the transmission ratio, has high transmission efficiency and large transmission power, and can be applied in the field of the transmission of various vehicles, machines and the like.

### BRIEF DESCRIPTION OF THE DRAWINGS

The accompanying drawings of the planetary friction type CVT mechanism provided by the present invention are as follows:
FIGS. 1 and 2 are schematic structural views of a first embodiment of the present invention;
FIGS. 3 to 6 are schematic structural views of a second embodiment of the present invention;
FIGS. 7 and 8 are schematic structural views of a third embodiment of the present invention;
FIGS. 9 to 12 are schematic structural views of a fourth embodiment of the present invention;
FIG. 13 is a schematic structural view of a fifth embodiment of the present invention;
FIG. 14 is a schematic structural view of a sixth embodiment of the present invention;
FIG. 15 is a schematic structural view of a seventh embodiment of the present invention;
FIG. 16 is a schematic structural view of an eighth embodiment of the present invention;
FIG. 17 is a schematic structural view of a ninth embodiment of the present invention;
FIG. 18 is a schematic structural view of a tenth embodiment of the present invention; and
FIG. 19 is a schematic structural view of the tenth embodiment of the present invention.

### DETAILED DESCRIPTION OF THE PREFERRED EMBODIMENTS

Further detailed description will be given below to the present invention with reference to the accompanying drawings and the embodiments.

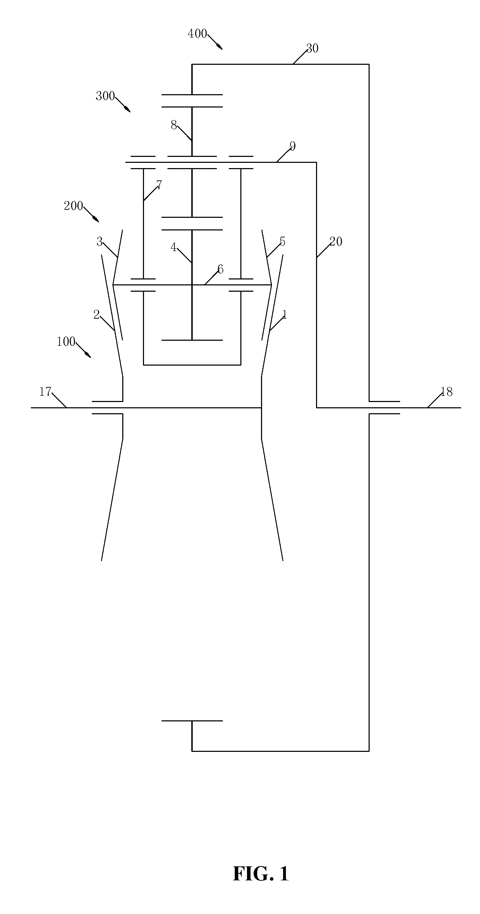

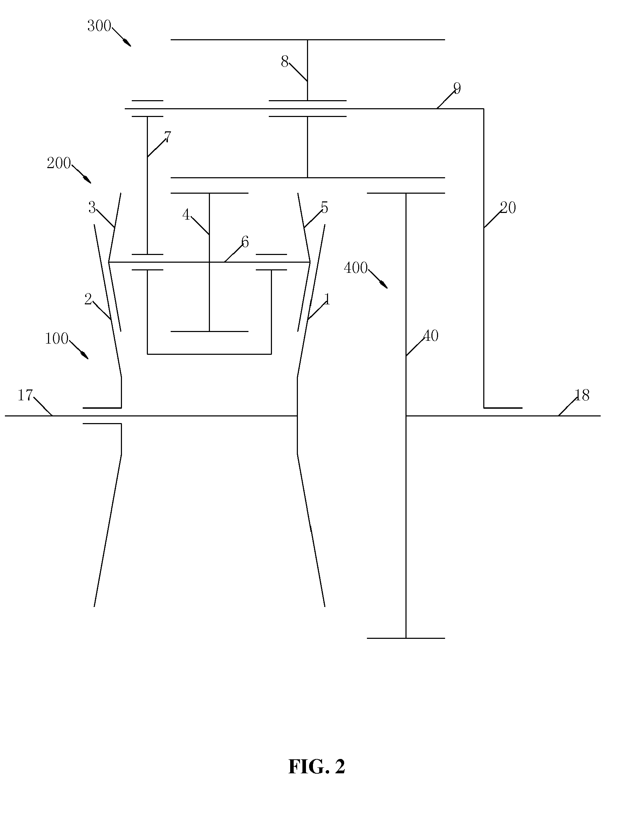

As illustrated in FIGS. 1 and 2, the planetary friction type CVT mechanism provided by the present invention comprises a planet carrier 20, at least one planetary line 300, a sun gear set 100 and a transmission unit 400, wherein the planetary line 300 includes an outer planetary gear 8, a planet shaft 9, an inner planetary gear set 200 and a rotary arm 7; the inner planetary gear set 200 includes an inner planetary gear 4, a first planetary bevel gear 3 and a second planetary bevel gear 5; the sun gear set 100 includes a first bevel gear 2 and a second bevel gear 1; the outer planetary gear 8 is respectively engaged with the transmission unit 400 and the inner planetary gear 4; the inner planetary gear set 200 is movably connected with the rotary arm 7; the rotary arm 7 and the outer planetary gear 8 are movably connected with the planet carrier 20 through the planet shaft 9; a conical surface of the first bevel gear 2 makes contact with a conical surface of the first planetary bevel gear 3 and meanwhile a conical surface of the second bevel gear 1 makes contact with a conical surface of the second planetary bevel gear 5; the first bevel gear 2 is movably connected with the second bevel gear 1; the first planetary bevel gear 3, the inner planetary gear 4 and the second planetary bevel gear 5 are adjacently arranged in sequence and mutually connected; or alternatively, the first planetary bevel gear 3, the second planetary bevel gear 5 and the inner planetary gear 4 are adjacently arranged in sequence and mutually connected; or alternatively, the inner planetary gear 4, the first planetary bevel gear 3 and the second planetary bevel gear 5 are adjacently arranged in sequence and mutually connected.

In the preferred embodiment of the present invention, alternatively, three planetary lines 300 are disposed on the planet carrier 20, and all the conical surfaces of three first planetary bevel gears 3 make contact with the conical surface of the first bevel gear 2 and meanwhile all the conical surfaces of three second planetary bevel gears 5 make contact with the conical surface of the second bevel gears 1; or alternatively, four planetary lines 300 are disposed on the planet carrier 20, and all the conical surfaces of four first planetary bevel gears 3 make contact with the conical surface of the first bevel gear 2 and meanwhile all the conical surfaces of four second planetary bevel gears 5 make contact with the conical surface of the second bevel gear 1.

In the preferred embodiment of the present invention, alternatively, the planet carrier 20 is respectively movably connected with the sun gear set 100 and the transmission unit 400; or alternatively, the sun gear set 100 is respectively movably connected with the planet carrier 20 and the transmission unit 400; or alternatively, the transmission unit 400 is respectively movably connected with the planet carrier 20 and the sun gear set 100; or alternatively, the planet carrier 20 is movably connected with the sun gear set 100; or alternatively, the planet carrier 20 is movably connected with the transmission unit 400; or alternatively, the transmission unit 400 is movably connected with the sun gear set 100.

In the preferred embodiment of the present invention, alternatively, the second bevel gear 1 is fixedly connected with an input shaft 17, and the first bevel gear 2 is movably connected with the input shaft 17; or alternatively, the first bevel gear 2 is fixedly connected with the input shaft 17, and the second bevel gear 1 is movably connected with the input shaft 17; or alternatively, the first bevel gear 2 and the second bevel gear 1 are sleeved with the input shaft 17 and can rotate synchronously and slide axially together with the input shaft 17.

In the preferred embodiment of the present invention, alternatively, an output shaft 18 is fixedly connected with the planet carrier 20 or the transmission unit 400.

In the preferred embodiment of the present invention, alternatively, the planet shaft 9 is fixedly connected with the planet carrier 20 and movably connected with the outer planetary gear 8 and the rotary arm 7; or alternatively, the planet carrier 9 is fixedly connected with the planet carrier 20 and movably connected with the outer planetary gear 8, and the rotary arm 7 is movably connected with the planet shaft 9 and the outer planetary gear 8; or alternatively, the planet shaft 9 is fixedly connected with the rotary arm 7 and movably connected with the outer planetary gear 8 and the planet carrier 20; or alternatively, the planet shaft 9 is fixedly connected with the outer planetary gear 8 and movably connected with the rotary arm 7 and the planet carrier 20.

In the preferred embodiment of the present invention, alternatively, the first planetary bevel gear 3, the inner planetary gear 4 and the second planetary bevel gear 5 are adjacently arranged in sequence and fixedly connected through a second planet shaft 6; or alternatively, the first planetary bevel gear 3, the second planetary bevel gear 5 and the inner planetary gear 4 are adjacently arranged in sequence and fixedly connected through the second planet shaft 6; or alternatively, the inner planetary gear 4, the first planetary bevel gear 3 and the second planetary bevel gear 5 are adjacently arranged in sequence and fixedly connected through the second planet shaft 6; or alternatively, the first planetary bevel gear 3 and the second planetary bevel gear 5 are fixedly connected with the second planet shaft 6, and the inner planetary gear 4 is sleeved with the second planet shaft 6 and can rotate synchronously and slide axially together with the second planet shaft 6; or alternatively, the inner planetary gear 4 is fixedly connected with the second planet shaft 6; the second planet shaft 6 is sleeved with a third planet shaft and can rotate synchronously and slide axially together with the third planet shaft; and the first planetary bevel gear 3 and the second planetary bevel gear 5 are fixedly connected with the third planet shaft.

In the preferred embodiment of the present invention, the inner planetary gear 4 is movably connected with the rotary arm 7; or alternatively, the second planet shaft 6 is movably connected with the rotary arm 7; or alternatively, the second planet shaft 6 is fixedly connected with the rotary arm 7 and movably connected with the inner planetary gear set 200.

In the preferred embodiment of the present invention, the transmission unit 400 is configured to be a ring gear 30 which is engaged with the outer planetary gear 8; and the planet carrier 20, the sun gear set 100 and the ring gear 30 are taken as elements for connection and transmission with the outside world, in which any one can be taken as a fixed element; after the fixed element is determined, any one of the other two can be taken as an input element; and after the input element is determined, the last one is taken as an output element. When the transmission ratio of the first bevel gear 2 and the second bevel gear 1 is n1, the transmission ratio of the first planetary bevel gear 3 and the second planetary bevel gear 5 being n2, the transmission ratio of the inner planetary gear 4 being n3, and the transmission ratio of the outer planetary gear 8 being n4, the calculation methods of the speed ratio between an input element and an output element of the planetary friction type CVT mechanism provided by the present invention under various control conditions are as follows:
(1) When the planet carrier 20 is taken as the input element, the sun gear set 100 is fixed, and the ring gear 40 is taken as the output element:
   Speed Ratio =
(2) When the planet carrier 20 is taken as the input element, the ring gear 40 is fixed, and the sun gear set 100 is taken as the output element:
   Speed Ratio =
(3) When the sun gear set 100 is taken as the input element, the planet carrier 20 is fixed, and the ring gear 40 is taken as the output element:
   Speed Ratio =
(4) When the sun gear set 100 is taken as the input element, the ring gear 40 is fixed, and the planet carrier 20 is taken as the output element:
   Speed Ratio =
(5) When the ring gear 40 is taken as the input element, the planet carrier 20 is fixed, and the sun gear set 100 is taken as the output element:
   Speed Ratio =
(6) When the ring gear 40 is taken as the input element, the sun gear set 100 is fixed, and the planet carrier 20 is taken as the output element:
   Speed Ratio =

When the transmission radius of the first bevel gear 2 and the first planetary bevel gear 3 is continuously changed, or alternatively, the transmission radius of the second bevel gear 1 and the second planetary bevel gear 5 is continuously changed, or alternatively, the transmission radius of the first bevel gear 2 and the first planetary bevel gear 3 is continuously changed and meanwhile the transmission radius of the second bevel gear 1 and the second planetary bevel gear 5 is continuously changed, the CVT can be achieved. After the radius of various transmission elements is substituted into the above formula, the speed ratio between the input element and the output element of the planetary friction type CVT mechanism provided by the present invention under various control conditions can be obtained. When the speed ratio is a positive number, the steering direction of the input element is the same with that of the output element; and when the speed ratio is a negative number, the steering direction of the input element is opposite to that of the output element.

In the preferred embodiment of the present invention, the transmission unit 400 is configured to be a sun gear 40 which is engaged with the outer planetary gear 8.

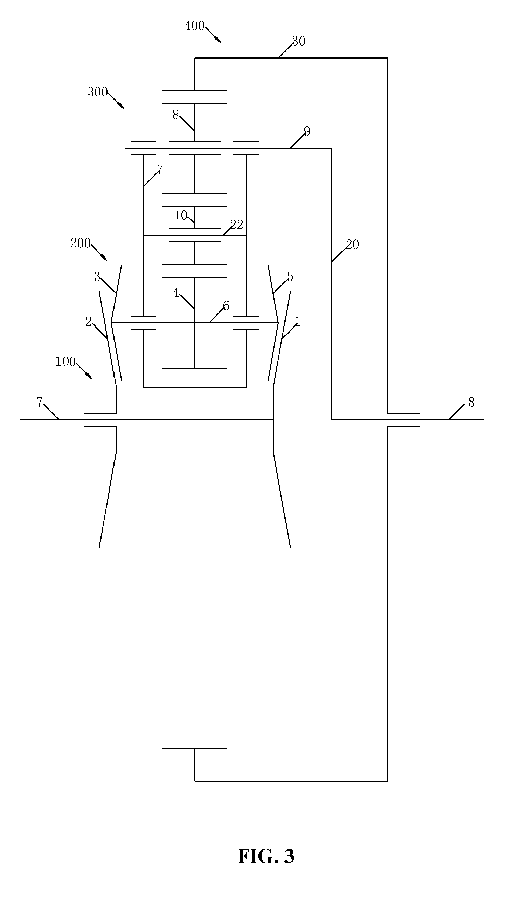

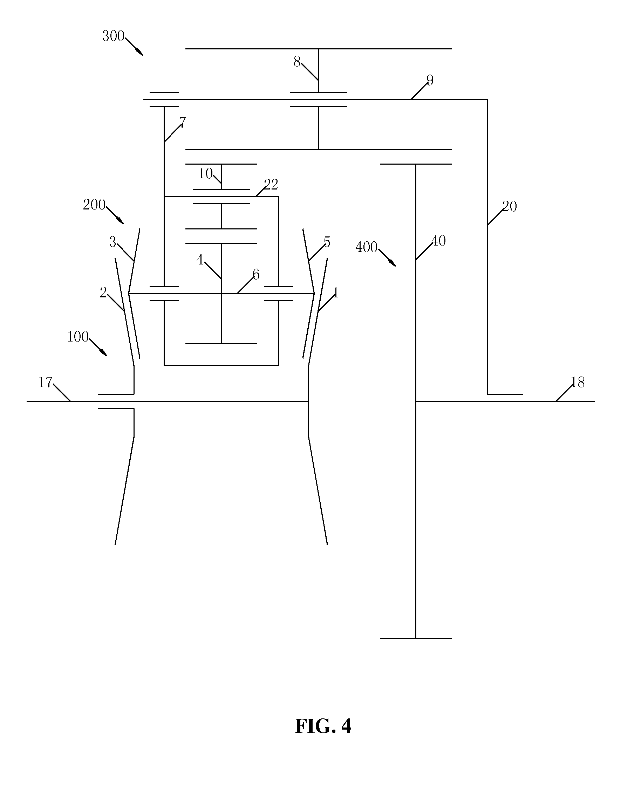

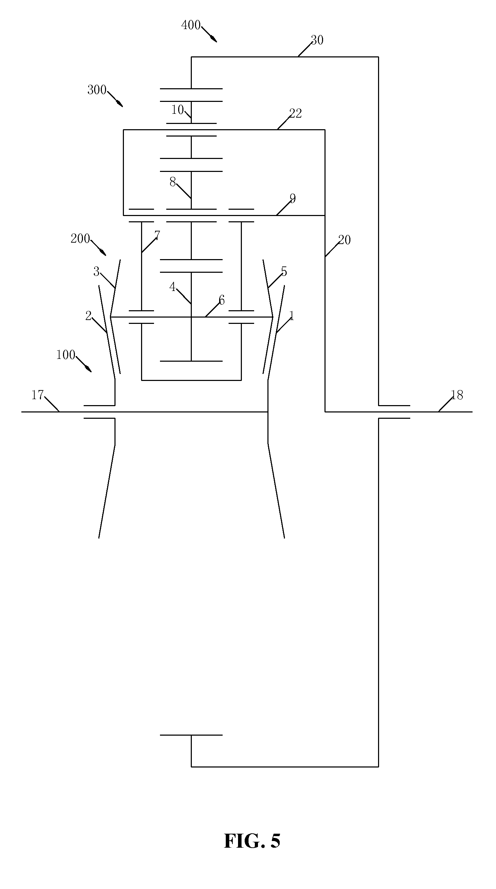

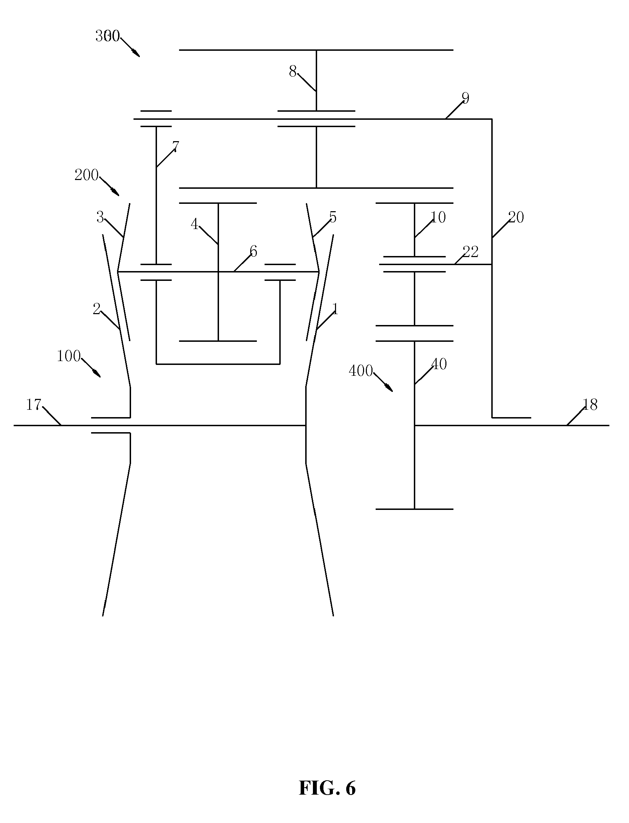

As illustrated in FIGS. 3 to 6, the planetary line 300 of the planetary friction type CVT mechanism provided by the present invention further includes a planetary gear 10, in which the planetary gear 10 is respectively engaged with the outer planetary gear 8 and the inner planetary gear 4 and movably connected with the rotary arm 7; or alternatively, the planetary gear 10 is respectively engaged with the outer planetary gear 8 and the transmission unit 400 and movably connected with the planet carrier 20.

In the preferred embodiment of the present invention, the planetary gear 10 is fixedly connected with a fourth planet shaft 22 which is movably connected with the rotary arm 7; or alternatively, the planetary gear 10 is movably connected with the fourth planet shaft 22 which is fixedly connected with the rotary arm 7; or alternatively, the planetary gear 10 is movably connected with the fourth planet shaft 22 which is fixedly connected with the planet carrier 20; or alternatively, the planetary gear 10 is fixedly connected with the fourth planet shaft 22 which is movably connected with the planet carrier 20.

In the preferred embodiment of the present invention, the outer planetary gear 8 is engaged with the ring gear 30 or the sun gear 40; or alternatively, the planetary gear 10 is engaged with the ring gear 30 or the sun gear 40.

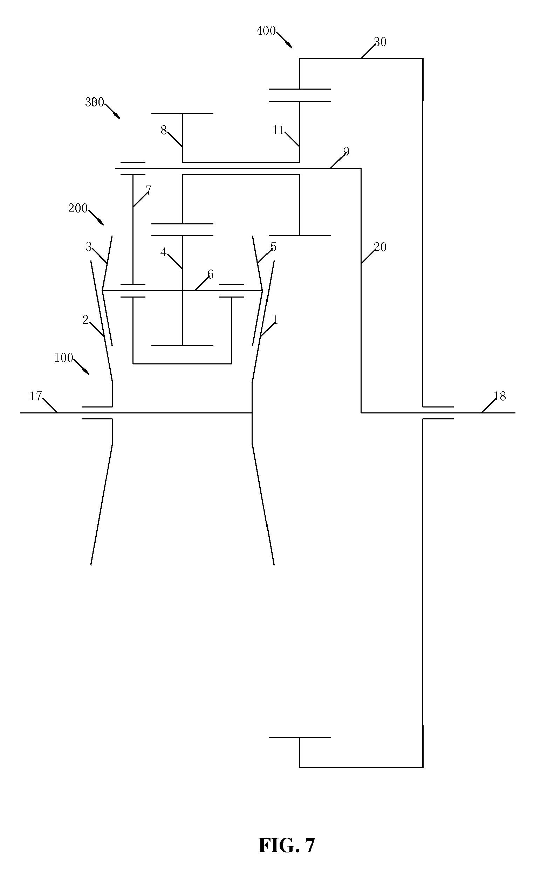

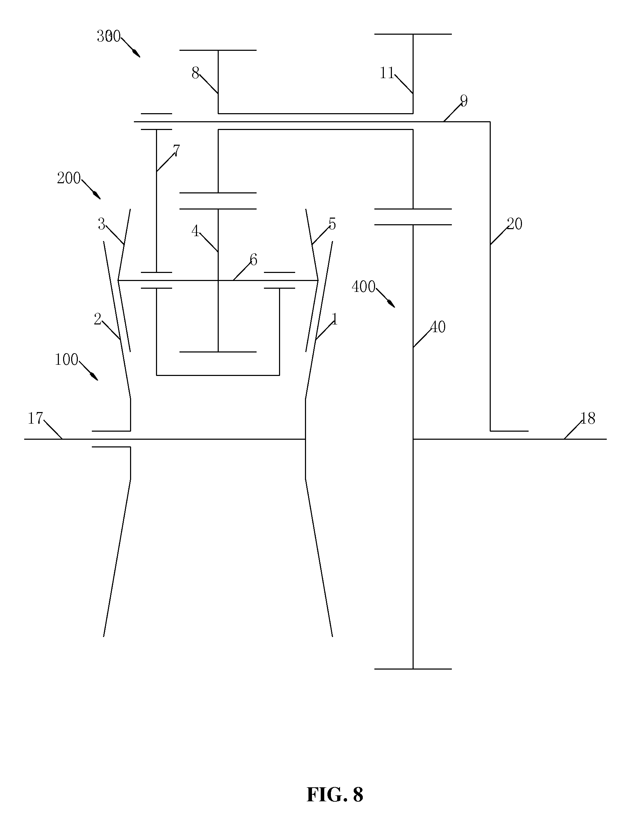

As illustrated in FIGS. 7 and 8, the planetary line 300 of the planetary friction type CVT mechanism provided by the present invention further includes a second outer planetary gear 11, in which the second outer planetary gear 11 is fixedly connected with the outer planetary gear 8 and engaged with the transmission unit 400, and the outer planetary gear 8 is engaged with the inner planetary gear 4.

In the preferred embodiment of the present invention, the second outer planetary gear 11 is fixedly connected with the outer planetary gear 8 through a fifth planet shaft.

In the preferred embodiment of the present invention, alternatively, the ring gear 30 or the sun gear 40 is engaged with the second outer planetary gear 11.

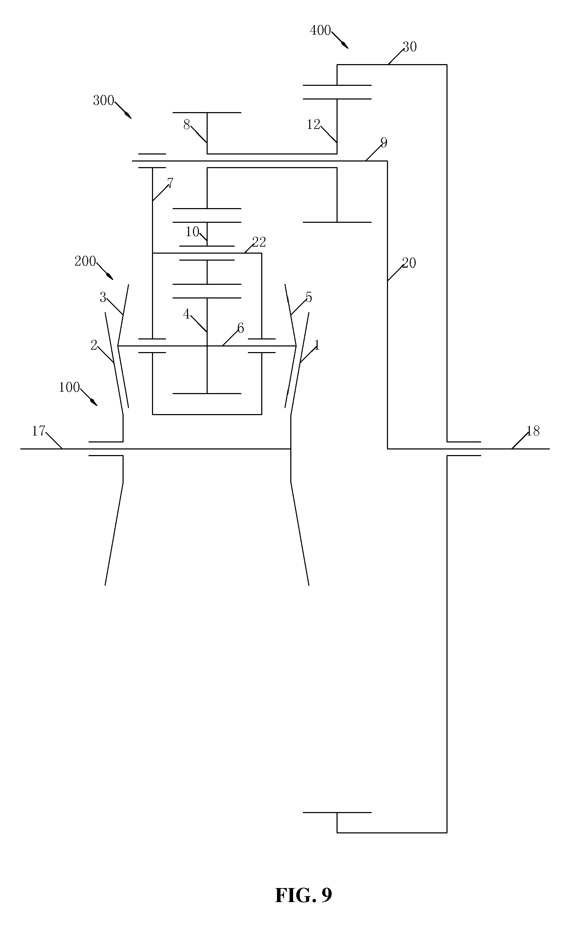

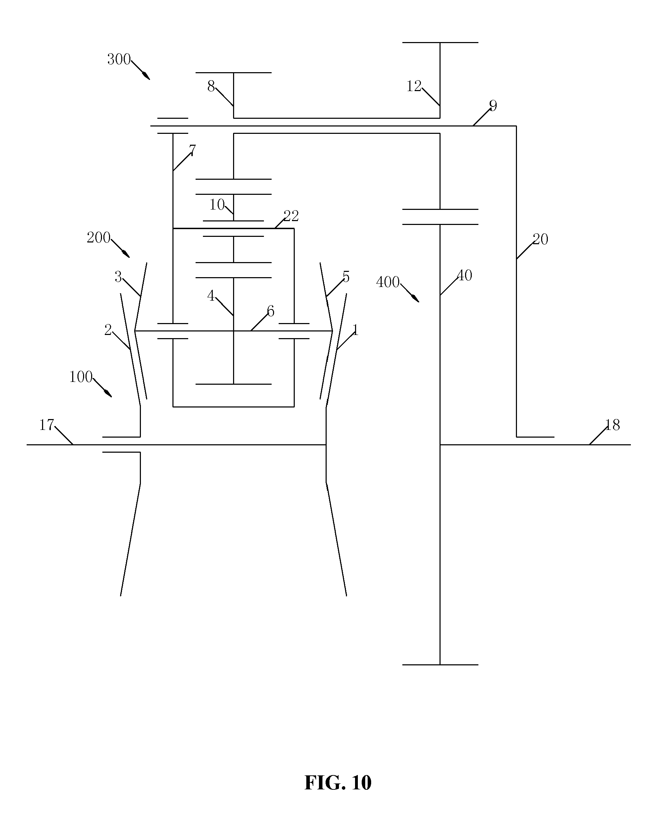

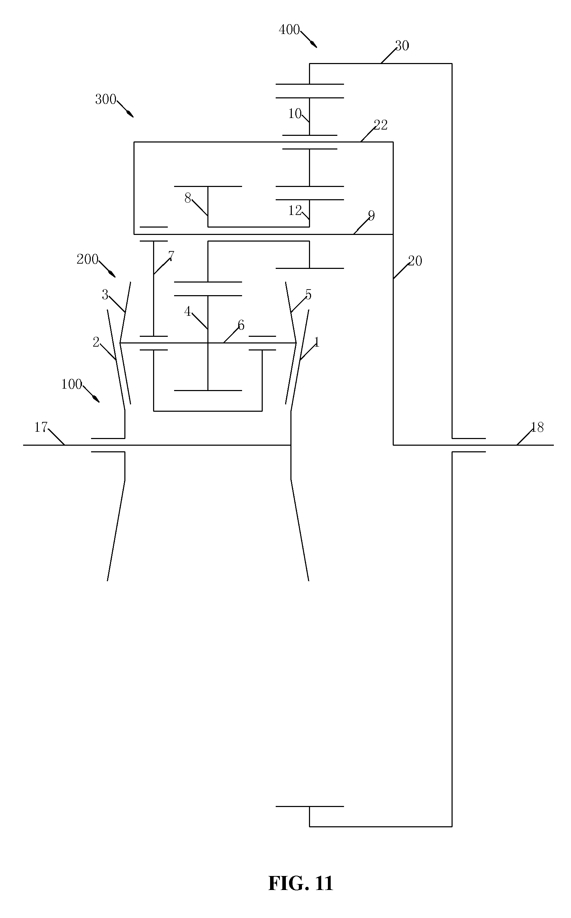

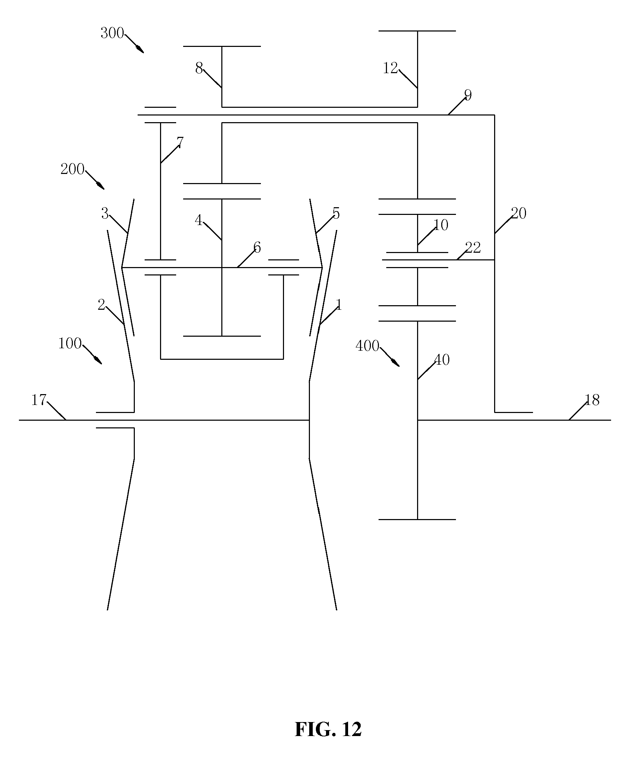

As illustrated in FIGS. 9 to 12, the planetary line 300 of the planetary friction type CVT mechanism provided by the present invention further includes a third outer planetary gear 12, in which the third outer planetary gear 12 is fixedly connected with the outer planetary gear 8 and engaged with the transmission unit 400, and the outer planetary gear 8 is engaged with the planetary gear 10; or alternatively, the third outer planetary gear 12 is engaged with the planetary gear 10, and the outer planetary gear 8 is engaged with the inner planetary gear 4.

In the preferred embodiment of the present invention, the third outer planetary gear 12 is fixedly connected with the outer planetary gear 8 through a sixth planet shaft.

In the preferred embodiment of the present invention, alternatively, the ring gear 30 or the sun gear 40 is engaged with the third outer planetary gear 12.

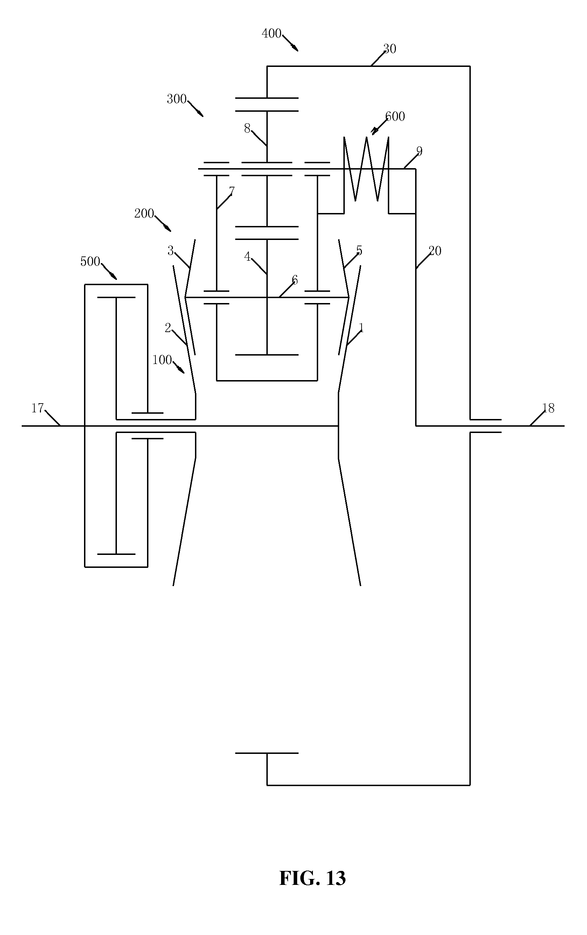

As illustrated in FIG. 13, the planetary friction type CVT mechanism provided by the present invention further comprises a first regulator 500 and a second regulator 600; the first bevel gear 2, the first regulator 500 and the second bevel gear 1 are connected with each other in sequence; and the rotary arm 7, the second regulator 600 and the planet carrier 20 are connected with each other in sequence.

In the preferred embodiment of the present invention, alternatively, the first regulator 500 is configured to be a hydraulic cylinder or at least one pressure spring; one end of the hydraulic cylinder 500 is connected with the first bevel gear 2 and the other end of the hydraulic cylinder 500 is connected with the second bevel gear 1; or alternatively, one end of the pressure spring 500 (not shown in the figure) is connected with the first bevel gear 2 and the other end of the pressure spring 500 is connected with second bevel gear 1; the second regulator 600 is configured to be at least one torsion spring, at least one tension spring or at least one second hydraulic cylinder; one end of the torsion spring 600 is connected with the rotary arm 7 and the other end of the torsion spring 600 is connected with the planet carrier 20; or alternatively, one end of the tension spring 600 (not shown in the figure) is connected with the rotary arm 7 and the other end of the tension spring 600 is connected with the planet carrier 20; or alternatively, one end of the second hydraulic cylinder 600 (not shown in the figure) is connected with the rotary arm 7 and the other end of the second hydraulic cylinder 600 is connected with the planet carrier 20. The control methods are as follows:
(1) A radial force is applied to the rotary arm 7 via the second regulator 600, so that the first bevel gear 2 makes close contact with the first planetary bevel gear 3 and the second bevel gear 1 makes close contact with the second planetary bevel gear 5 for power transmission; meanwhile, an axial force is applied to the first bevel gear 2 or the second bevel gear 1 via the first regulator 500, so that the first bevel gear 2 is driven to move towards the second bevel gear 1, and hence the transmission ratio between the first bevel gear 2 and the first planetary bevel gear 3 and the transmission ratio between the second bevel gear 1 and the second planetary bevel gear 5 are continuously increased or decreased, and consequently the maximum transmission ratio or the minimum transmission ratio can be obtained.
(2) The first bevel gear 2 or the second bevel gear 1 stops moving, and the transmission ratio between the first bevel gear 2 and the first planetary bevel gear 3 and the transmission ratio between the second bevel gear 1 and the second planetary bevel gear 5 are invariable.
(3) The process of applying the axial force to the first bevel gear 2 or the second bevel gear 1 is stopped and the first bevel gear 2 or the second bevel gear 1 is driven to move in the opposite direction, and hence the transmission ratio between the first bevel gear 2 and the first planetary bevel gear 3 and the transmission ratio between the second bevel gear 1 and the second planetary bevel gear 5 are continuously decreased or increased, and consequently the minimum transmission ratio or the maximum transmission ratio can be obtained.

In the preferred embodiment of the present invention, the planet carrier 20, the sun gear set 100 and the transmission unit 400 are taken as elements for connection and transmission with the outside world, in which any one can be taken as an input element and connected with a power source or connected with the power source through a clutch; after the input element is determined, any one of the other two can be taken as an output element or connected with a differential; and after the output element is determined, the last one is taken as a control element and fixed or fixed through a brake.

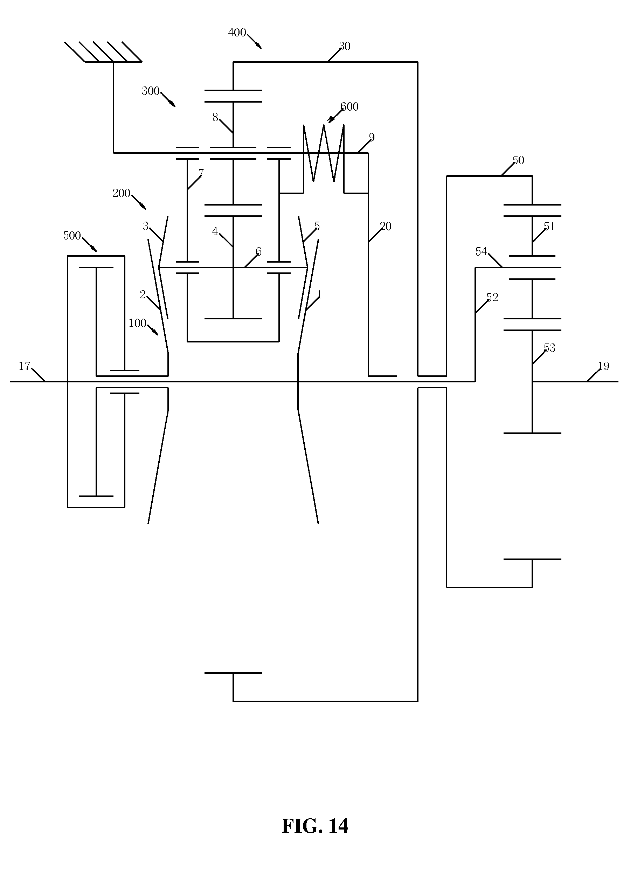

As illustrated in FIG. 14, the planetary friction type CVT mechanism further comprises a second ring gear 50, a second planet carrier 52, a second sun gear 53 and at least one second planetary gear 51, in which the second planetary gear 51 is movably connected with the second planet carrier 52 and respectively engaged with the second sun gear 53 and the second ring gear 50, and the second ring gear 50 and the second planet carrier 52 are fixedly connected with the transmission unit 400, the sun gear set 100 or the planet carrier 20; or alternatively, the second ring gear 50 and the second sun gear 53 are fixedly connected with the transmission unit 400, the sun gear set 100 or the planet carrier 20; or alternatively, the second planet carrier 52 and the second sun gear 53 are fixedly connected with the transmission unit 400, the sun gear set 100 or the planet carrier 20.

In the preferred embodiment of the present invention, alternatively, three second planetary gears 51 are disposed on the second planet carrier 52 and are respectively engaged with the second sun gear 53 and the second ring gear 50; or alternatively, four second planetary gears 51 are disposed on the second planet carrier 52 and respectively engaged with the second sun gear 53 and the second ring gear 50.

In the preferred embodiment of the present invention, alternatively, the second planetary gear 51 is fixedly connected with a seventh planet shaft 54 which is movably connected with the second planet carrier 52; or alternatively, the second planet carrier 52 is fixedly connected with the seventh planet shaft 54 which is movably connected with the second planetary gear 51.

In the preferred embodiment of the present invention, alternatively, a second output shaft 19 is fixedly connected with the second sun gear 53, the second ring gear 50 or the second planet carrier 52.

In the preferred embodiment of the present invention, alternatively, the second ring gear 50 is fixedly connected with the ring gear 30, the sun gear 40, the first bevel gear 2, the second bevel gear 1 or the input shaft 17.

In the preferred embodiment of the present invention, alternatively, the second planet carrier 52 is fixedly connected with the ring gear 30, the sun gear 40, the first bevel gear 2, the second bevel gear 1 or the input shaft 17.

In the preferred embodiment of the present invention, alternatively, the second sun gear 53 is fixedly connected with the ring gear 30, the sun gear 40, the first bevel gear 2, the second bevel gear 1 or the input shaft 17.

In the preferred embodiment of the present invention, alternatively, the second planet carrier 52, the second sun gear 53 or the second ring gear 50 is taken as an output element and connected with the differential or connected with the differential through the second output shaft 19.

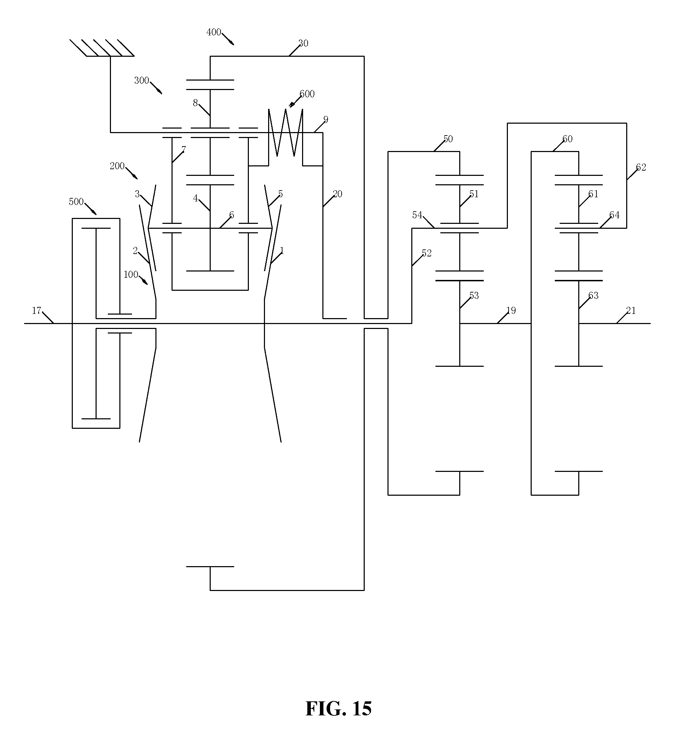

As illustrated in FIG. 15, the planetary friction type CVT mechanism further comprises a third ring gear 60, a third planet carrier 62, a third sun gear 63 and at least one third planetary gear 61, in which the third planetary gear 61 is movably connected with the third planet carrier 62 and respectively engaged with the third sun gear 63 and the third ring gear 60, and the third ring gear 60 and the third planet carrier 62 are fixedly connected with the second ring gear 50, the second sun gear 53 or the second planet carrier 52; or alternatively, the third ring gear 60 and the third sun gear 63 are fixedly connected with the second ring gear 50, the second sun gear 53 or the second planet carrier 52; or alternatively, the third planet carrier 62 and the third sun gear 63 are fixedly connected with the second ring gear 50, the second sun gear 53 or the second planet carrier 52.

In the preferred embodiment of the present invention, alternatively, three third planetary gears 61 are disposed on the third planet carrier 62 and are respectively engaged with the third sun gear 63 and the third ring gear 60; or alternatively, four third planetary gears 61 are disposed on the third planet carrier 62 and respectively engaged with the third sun gear 63 and the third ring gear 60.

In the preferred embodiment of the present invention, alternatively, the third planetary gear 61 is fixedly connected with an eighth planet shaft 64 which is movably connected with the third planet carrier 62; or alternatively, the third planet carrier 62 is fixedly connected with the eighth planet shaft 64 which is movably connected with the third planetary gear 61.

In the preferred embodiment of the present invention, alternatively, a third output shaft 21 is fixedly connected with the third sun gear 63, the third planet carrier 62 or the third ring gear 60.

In the preferred embodiment of the present invention, alternatively, the third planet carrier 62, the third sun gear 63 or the third ring gear 60 is taken as an output element and connected with the differential or connected with the differential through the third output shaft 21.

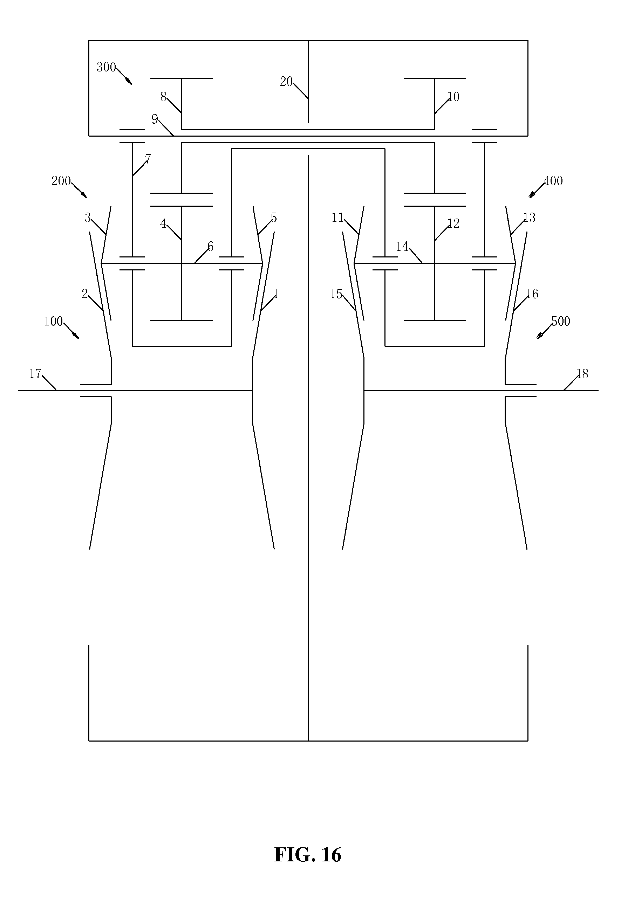

As illustrated in FIG. 16, the planetary friction type CVT mechanism provided by the present invention comprises a planet carrier 20, at least one planetary line 300, a sun gear set 100 and a transmission unit 500, wherein the planetary line 300 includes a first outer planetary gear 8, a second outer planetary gear 10, a planet shaft 9, a first inner planetary gear set 200, a second inner planetary gear set 400 and a rotary arm 7; the first inner planetary gear set 200 includes a first inner planetary gear 4, a first planetary bevel gear 3 and a second planetary bevel gear 5; the second inner planetary gear set 400 includes a second inner planetary gear 12, a third planetary bevel gear 11 and a fourth planetary bevel gear 13; the sun gear set 100 includes a first bevel gear 2 and a second bevel gear 1; the transmission unit 500 includes a third bevel gear 15 and a fourth bevel gear 16; a conical surface of the first bevel gear 2 makes contact with a conical surface of the first planetary bevel gear 3 and meanwhile a conical surface of the second bevel gear 1 makes contact with a conical surface of the second planetary bevel gear 5; the first bevel gear 2 is movably connected with the second bevel gear 1; a conical surface of the third bevel gear 15 makes contact with a conical surface of the third planetary bevel gear 11 and meanwhile a conical surface of the fourth bevel gear 16 makes contact with a conical surface of the fourth planetary bevel gear 13; the third bevel gear 15 is movably connected with the fourth bevel gear 16; the first inner planetary gear set 200 and the second inner planetary gear set 400 are respectively movably connected with the rotary arm 7; the first outer planetary gear 8 is fixedly connected with the second outer planetary gear 10; the first outer planetary gear 8, the second outer planetary gear 10 and the rotary arm 7 are movably connected with the planet carrier 20 through the planet shaft 9; the first outer planetary gear 8 is engaged with the first inner planetary gear 4; the second outer planetary gear 10 is engaged with the second inner planetary gear 12; the first planetary bevel gear 3, the first inner planetary gear 4 and the second planetary bevel gear 5 are adjacently arranged in sequence and mutually connected; or alternatively, the first planetary bevel gear 3, the second planetary bevel gear 5 and the first inner planetary gear 4 are adjacently arranged in sequence and mutually connected; or alternatively, the first inner planetary gear 4, the first planetary bevel gear 3 and the second planetary bevel gear 4 are adjacently arranged in sequence and mutually connected; the third planetary bevel gear 11, the second inner planetary gear 12 and the fourth planetary bevel gear 13 are adjacently arranged in sequence and mutually connected; or alternatively, the third planetary bevel gear 11, the fourth planetary bevel gear 13 and the second inner planetary gear 12 are adjacently arranged in sequence and mutually connected; or alternatively, the second inner planetary gear 12, the third planetary bevel gear 11 and the fourth planetary bevel gear 13 are adjacently arranged in sequence and mutually connected.

In the preferred embodiment of the present invention, the first outer planetary gear 8 and the second outer planetary gear 10 may also be configured to be an outer planetary gear 8 which is respectively engaged with the first inner planetary gear 4 and the second inner planetary gear 12; and the outer planetary gear 8 and the rotary arm 7 are movably connected with the planet carrier 20 through the planet shaft 9.

In the preferred embodiment of the present invention, alternatively, three planetary lines 300 are disposed on the planet carrier 20; all the conical surfaces of three first planetary bevel gears 3 make contact with the conical surface of the second bevel gear 1 and meanwhile all the conical surfaces of three second planetary bevel gears 5 make contact with the conical surface of the second bevel gear 1; all the conical surfaces of three third planetary bevel gears 11 make contact with the conical surface of the third bevel gear 15 and meanwhile all the conical surfaces of three fourth planetary bevel gears 13 make contact with the conical surface of the fourth bevel gear 16; or alternatively, four planetary lines 300 are disposed on the planet carrier 20; all the conical surfaces of four first planetary bevel gears 3 make contact with the conical surface of the first bevel gear 2 and meanwhile all the conical surfaces of four second planetary bevel gears 5 make contact with the conical surface of the second bevel gear 1; and all the conical surfaces of four third planetary bevel gears 11 make contact with the conical surface of the third bevel gear 15 and meanwhile all the conical surfaces of four fourth planetary bevel gears 13 make contact with the conical surface of the fourth bevel gear 16.

In the preferred embodiment of the present invention, alternatively, the planet carrier 20, the sun gear set 100 and the transmission unit 500 are taken as elements for connection and transmission with the outside world, in which any one can be taken as a fixed element; after the fixed element is determined, any one of the other two can be taken as an input element; and after the input element is determined, the last one is taken as an output element.

In the preferred embodiment of the present invention, alternatively, the planet carrier 20 is respectively movably connected with the sun gear set 100 and the transmission unit 500; or alternatively, the sun gear set 100 is respectively movably connected with the planet carrier 20 and the transmission unit 500; or alternatively, the transmission unit 500 is respectively movably connected with the planet carrier 20 and the sun gear set 100; or alternatively, the planet carrier 20 is movably connected with the sun gear set 100; or alternatively, the planet carrier 20 is movably connected with the transmission unit 500; or alternatively, the transmission unit 500 is movably connected with the sun gear set 100.

In the preferred embodiment of the present invention, alternatively, the first bevel gear 2 is fixedly connected with the input shaft 17 which is movably connected with the second bevel gear 1; or alternatively, the second bevel gear 1 is fixedly connected with the input shaft 17 which is movably connected with the first bevel gear 2; or alternatively, the first bevel gear 2 and the second bevel gear 1 are sleeved with the input shaft 17 and can rotate synchronously and slide axially together with the input shaft 17.

In the preferred embodiment of the present invention, the third bevel gear 15 is fixedly connected with the output shaft 18 which is movably connected with the fourth bevel gear 16; or alternatively, the fourth bevel gear 16 is fixedly connected with the output shaft 18 which is movably connected with the third bevel gear 15; or alternatively, the third bevel gear 15 and the fourth bevel gear 16 are sleeved on the output shaft 18 and can rotate synchronously and slide axially together with the output shaft 18.

In the preferred embodiment of the present invention, the first planetary bevel gear 3, the first inner planetary gear 4 and the second planetary bevel gear 5 are adjacently arranged in sequence and fixedly connected through a second planet shaft 6; or alternatively, the first planetary bevel gear 3, the second planetary bevel gear 5 and the first inner planetary gear 4 are adjacently arranged in sequence and fixedly connected through the second planet shaft 6; or alternatively, the first inner planetary gear 4, the first planetary bevel gear 3 and the second planetary bevel gear 5 are adjacently arranged in sequence and fixedly connected through the second planet shaft 6; or alternatively, the first planetary bevel gear 3 and the second planetary bevel gear 5 are fixedly connected with the second planet shaft 6, and the first inner planetary gear 4 is sleeved with the second planet shaft 6 and can rotate synchronously and slide axially together with the second planet shaft 6; or alternatively, the first inner planetary gear 4 is fixedly connected with the second planet shaft 6 which is sleeved with a third planet shaft and can rotate synchronously and slide axially together with the third planet shaft, and the first planetary bevel gear 3 and the second planetary bevel gear 5 are fixedly connected with the third planet shaft.

In the preferred embodiment of the present invention, alternatively, the first inner planetary gear 4 is movably connected with the rotary arm 7; or alternatively, the second planet shaft 6 is movably connected with the rotary arm 7; or alternatively, the second planet shaft 6 is fixedly connected with the rotary arm 7 and movably connected with the first inner planetary gear set 200.

In the preferred embodiment of the present invention, alternatively, the third planetary bevel gear 11, the second inner planetary gear 12 and the fourth planetary bevel gear 13 are adjacently arranged in sequence and fixedly connected through a fourth planet shaft 14; or alternatively, the third planetary bevel gear 11, the fourth planetary bevel gear 13 and the second inner planetary gear 12 are adjacently arranged in sequence and fixedly connected through the fourth planet shaft 14; or alternatively, the second inner planetary gear 12, the third planetary bevel gear 11 and the fourth planetary bevel gear 13 are adjacently arranged in sequence and fixedly connected through the fourth planet shaft 14; or alternatively, the third planetary bevel gear 11 and the fourth planetary bevel gear 13 are fixedly connected through the fourth planet shaft 14, and the second inner planetary gear 12 is sleeved with the fourth planet shaft 14 and can rotate synchronously and slide axially together with the fourth planet shaft 14; or alternatively, the second inner planetary 12 is fixedly connected with the fourth planet shaft 14 which is sleeved with a fifth planet shaft and can rotate synchronously and slide axially together with the fifth planet shaft, and the third planetary bevel gear 11 and the fourth planetary bevel gear 13 are fixedly connected with the fifth planet shaft.

In the preferred embodiment of the present invention, alternatively, the second inner planetary gear 12 is movably connected with the rotary arm 7; or alternatively, the fourth planet shaft 14 is movably connected with the rotary arm 7; or alternatively, the fourth planet shaft 14 is fixedly connected with the rotary arm 7 and movably connected with the second inner planetary gear set 400.

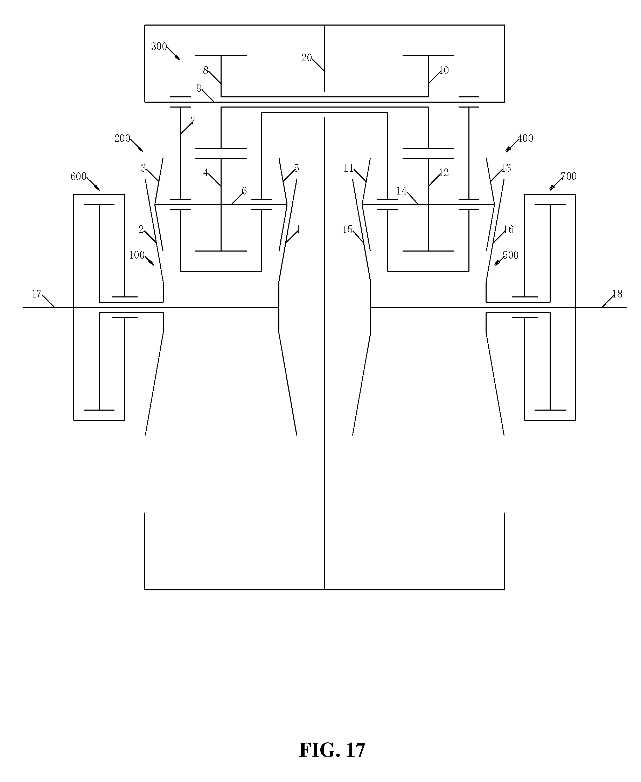

As illustrated in FIG. 17, the planetary friction type CVT mechanism further comprises a first regulator 600 and a second regulator 700; the first bevel gear 2, the first regulator 600 and the second bevel gear 1 are connected with each other in sequence; and the third bevel gear 15, the second regulator 700 and the fourth bevel gear 16 are connected with each other in sequence.

In the preferred embodiment of the present invention, alternatively, the first regulator 600 is configured to be a hydraulic cylinder or at least one pressure spring; one end of the hydraulic cylinder 600 is connected with the first bevel gear 2 and the other end of the hydraulic cylinder 600 is connected with the second bevel gear 1; or alternatively, one end of the pressure spring 600 (not shown in the figure) is connected with the first bevel gear 2 and the other end of the pressure spring 600 is connected with the second bevel gear 1; the second regulator 700 is configured to be a second hydraulic cylinder or at least one second pressure spring; one end of the second hydraulic cylinder 700 is connected with the third bevel gear 15 and the other end of the second hydraulic cylinder 700 is connected with the fourth bevel gear 16; or alternatively, one end of the second pressure spring 700 (not shown in the figure) is connected with the third bevel gear 15 and the other end of the second pressure spring 700 is connected with the fourth bevel gear 16.

In the preferred embodiment of the present invention, alternatively, the planet carrier 20, the sun gear set 100 and the transmission unit 500 are taken as elements for connection and transmission with the outside world, in which any one can be taken as an input element and connected with a power source or connected with the power source through a clutch; after the input element is determined, any one of the other two can be taken as an output element or connected with a differential; and after the output element is determined, the last one is taken as a control element and fixed or fixed through a brake.

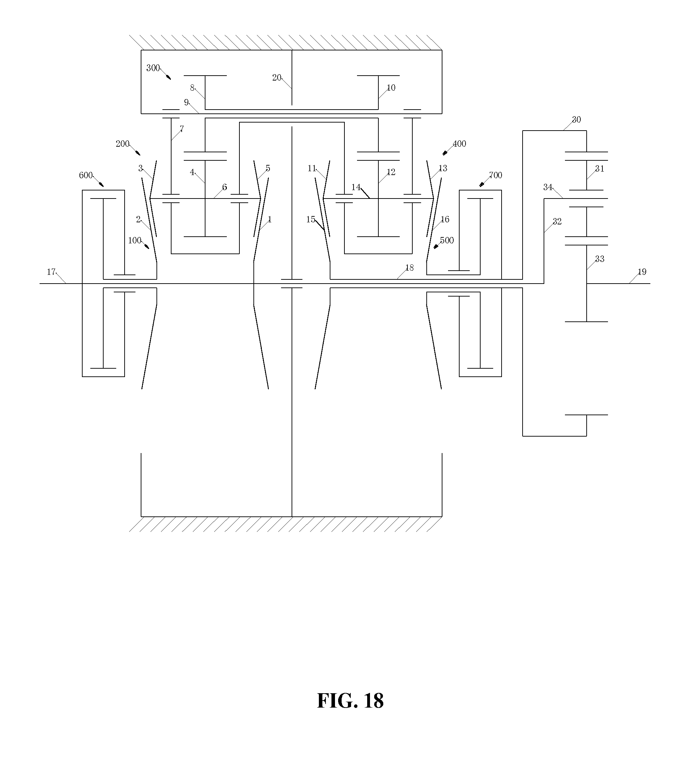

As illustrated in FIG. 18, the planetary friction type CVT mechanism further comprises a second ring gear 30, a second planet carrier 32, a second sun gear 33 and at least one second planetary gear 31, wherein the second planetary gear 31 is movably connected with the second planet carrier 32 and respectively engaged with the second sun gear 33 and the second ring gear 30; the second ring gear 30 and the second planet carrier 32 are fixedly connected with the transmission unit 500, the sun gear set 100 or the planet carrier 20; or alternatively, the second ring gear 30 and the second sun gear 33 are fixedly connected with the transmission unit 500, the sun gear set 100 or the planet carrier 20; or alternatively, the second planet carrier 32 and the second sun gear 33 are fixedly connected with the transmission unit 500, the sun gear set 100 or the planet carrier 20.

In the preferred embodiment of the present invention, alternatively, the second planetary gear 31 is fixedly connected with a sixth planet shaft 34 which is movably connected with the second planet carrier 32; or alternatively, the second planet carrier 32 is fixedly connected with the sixth planet shaft 34 which is movably connected with the second planetary gear 31.

In the preferred embodiment of the present invention, alternatively, three second planetary gears 31 are disposed on the second planet carrier 32 and are respectively engaged with the second sun gear 33 and the second ring gear 30; or alternatively, four second planetary gears 31 are disposed on the second planet carrier 32 and respectively engaged with the second sun gear 33 and the second ring gear 30.

In the preferred embodiment of the present invention, the second output shaft 19 is fixedly connected with the second sun gear 33, the second ring gear 30 or the second planet carrier 32.

In the preferred embodiment of the present invention, alternatively, the second ring gear 30 is fixedly connected with the first bevel gear 2, the second bevel gear 1, the input shaft 17, the third bevel gear 11, the fourth bevel gear 13 or the output shaft 18.

In the preferred embodiment of the present invention, alternatively, the second planet carrier 32 is fixedly connected with the first bevel gear 2, the second bevel gear 1, the input shaft 17, the third bevel gear 11, the fourth bevel gear 13 or the output shaft 18.

In the preferred embodiment of the present invention, alternatively, the second sun gear 33 is fixedly connected with the first bevel gear 2, the second bevel gear 1, the input shaft 17, the third bevel gear 11, the fourth bevel gear 13 or the output shaft 18.

In the preferred embodiment of the present invention, the second planet carrier 32, the second sun gear 33 and the second ring gear 30 are taken as output elements and connected with the differential or connected with the differential through the second output shaft 19.

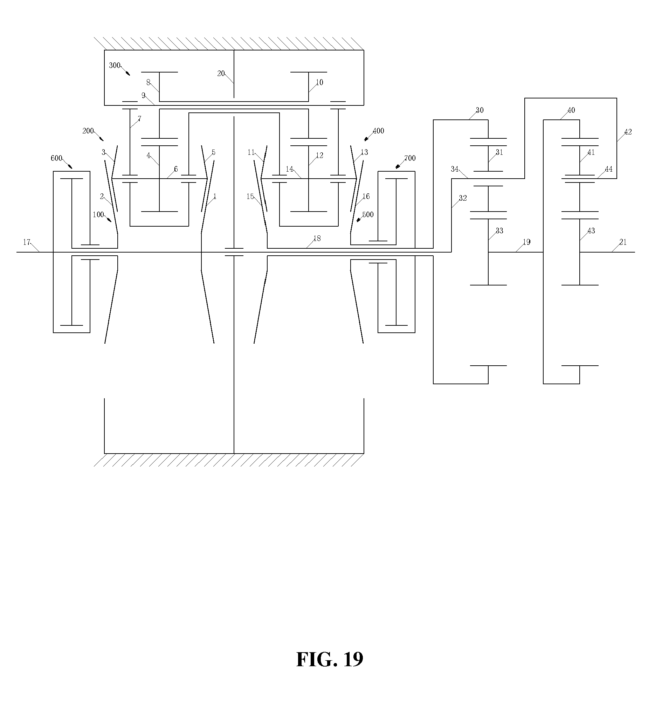

As illustrated in FIG. 19, the planetary friction type CVT mechanism further comprises a third ring gear 40, a third planet carrier 42, a third sun gear 43 and at least one third planetary gear 41, wherein the third planetary gear 41 is movably connected with the third planet carrier 42 and respectively engaged with the third sun gear 43 and the third ring gear 40, and the third ring gear 40 and the third planet carrier 42 are fixedly connected with the second ring gear 30, the second sun gear 33 or the second planet carrier 32; or alternatively, the third ring gear 40 and the third sun gear 43 are fixedly connected with the second ring gear 30, the second sun gear 33 or the second planet carrier 32; or alternatively, the third planet carrier 42 and the third sun gear 43 are fixedly connected with the second ring gear 30, the second sun gear 33 or the second planet carrier 32.

In the preferred embodiment of the present invention, alternatively, three third planetary gears 41 are disposed on the third planet carrier 42 and are respectively engaged with the third sun gear 43 and the third ring gear 40; or alternatively, four third planetary gears 41 are disposed on the third planet carrier 42 and respectively engaged with the third sun gear 43 and the third ring gear 40.

In the preferred embodiment of the present invention, alternatively, the third planetary gear 41 is fixedly connected with a seventh planet shaft 44 which is movably connected with the third planet carrier 42; or alternatively, the third planet carrier 42 is fixedly connected with the seventh planet shaft 44 which is movably connected with the third planetary gear 41.

In the preferred embodiment of the present invention, alternatively, a third output shaft 21 is fixedly connected with the third sun gear 43, the third planet carrier 42 or the third ring gear 40.

In the preferred embodiment of the present invention, alternatively, the third planet carrier 42, the third sun gear 43 or the third ring gear 40 is taken as output elements and connected with the differential or connected with the differential through the third output shaft 21.

Various variations can be made to the present invention by those skilled in the art without departing from the essence and the spirit of the present invention. The foregoing is only the preferred embodiments of the present invention and not intended to limit the scope of the present invention. All the equivalent structural changes made with reference to the content of the description and the accompanying drawings of the present invention should fall within the scope of the present invention.

## Claims

1. A planetary friction type continuously variable transmission (CVT) mechanism, comprising a planet carrier, at least one planetary line, a sun gear set and a transmission unit, wherein the planetary line includes an outer planetary gear, a planet shaft, an inner planetary gear set and a rotary arm; the inner planetary gear set includes an inner planetary gear, a first planetary bevel gear and a second planetary bevel gear; the sun gear set includes a first bevel gear and a second bevel gear;
the outer planetary gear is respectively engaged with the transmission unit and the inner planetary gear;
the inner planetary gear set is movably connected with the rotary arm; the rotary arm and the outer planetary gear are movably connected with the planet carrier through the planet shaft;
a conical surface of the first bevel gear makes contact with a conical surface of the first planetary bevel gear and meanwhile a conical surface of the second bevel gear makes contact with a conical surface of the second planetary bevel gear; the first bevel gear is movably connected with the second bevel gear;
the first planetary bevel gear, the inner planetary gear and the second planetary bevel gear are adjacently arranged in sequence and mutually connected; or alternatively, the first planetary bevel gear, the second planetary bevel gear and the inner planetary gear are adjacently arranged in sequence and mutually connected; or alternatively, the inner planetary gear, the first planetary bevel gear and the second planetary bevel gear are adjacently arranged in sequence and mutually connected.

2. The planetary friction type CVT mechanism according to claim 1, wherein the planetary line further includes a planetary gear, in which the planetary gear is respectively engaged with the outer planetary gear and the inner planetary gear and movably connected with the rotary arm; or alternatively, the planetary gear is respectively engaged with the outer planetary gear and the transmission unit and movably connected with the planet carrier.

3. The planetary friction type CVT mechanism according to claim 1, wherein the planetary line further includes a second outer planetary gear, in which the second outer planetary gear is fixedly connected with the outer planetary gear and engaged with the transmission unit; and the outer planetary gear is engaged with the inner planetary gear.

4. The planetary friction type CVT mechanism according to claim 2, wherein the planetary line further includes a third outer planetary gear, in which the third outer planetary gear is fixedly connected with the outer planetary gear and engaged with the transmission unit, and the outer planetary gear is engaged with the planetary gear; or alternatively, the third outer planetary gear is engaged with the planetary gear, and the outer planetary gear is engaged with the inner planetary gear.

5. The planetary friction type CVT mechanism according to any one of claims 1 to 4, wherein the planetary friction type CVT mechanism further comprises a first regulator and a second regulator; the first bevel gear, the first regulator and the second bevel gear are connected with each other in sequence; and the rotary arm, the second regulator and the planet carrier are connected with each other in sequence.

6. The planetary friction type CVT mechanism according to claim 5, wherein the planetary friction type CVT mechanism further comprises a second ring gear, a second planet carrier, a second sun gear and at least one second planetary gear; the second planetary gear is movably connected with the second planet carrier and respectively engaged with the second sun gear and the second ring gear; the second ring gear and the second planet carrier are fixedly connected with the transmission unit, the sun gear set or the planet carrier; or alternatively, the second ring gear and the second sun gear are fixedly connected with the transmission unit, the sun gear set or the planet carrier; or alternatively, the second planet carrier and the second sun gear are fixedly connected with the transmission unit, the sun gear set or the planet carrier.

7. The planetary friction type CVT mechanism according to claim 6, wherein the planetary friction type CVT mechanism further comprises a third ring gear, a third planet carrier, a third sun gear and at least one third planetary gear; the third planetary gear is movably connected with the third planet carrier and respectively connected with the third sun gear and the third ring gear; the third ring gear and the third planet carrier are fixedly connected with the second ring gear, the second sun gear or the second planet carrier; or alternatively, the third ring gear and the third sun gear are fixedly connected with the second ring gear, the second sun gear or the second planet carrier; or alternatively, the third planet carrier and the third sun gear are fixedly connected with the second ring gear, the second sun gear or the second planet carrier.

8. A planetary friction type CVT mechanism, comprising a planet carrier, at least one planetary line, a sun gear set and a transmission unit, wherein the planetary line includes a first outer planetary gear, a second outer planetary gear, a planet shaft, a first inner planetary gear set, a second inner planetary gear set and a rotary arm; the first inner planetary gear set includes a first inner planetary gear, a first planetary bevel gear and a second planetary bevel gear; the second inner planetary gear set includes a second inner planetary gear, a third planetary bevel gear and a fourth planetary bevel gear; the sun gear set includes a first bevel gear and a second bevel gear; the transmission unit includes a third bevel gear and a fourth bevel gear;
a conical surface of the first bevel gear makes contact with a conical surface of the first planetary bevel gear and meanwhile a conical surface of the second bevel gear makes contact with a conical surface of the second planetary bevel gear; the first bevel gear is movably connected with the second bevel gear;
a conical surface of the third bevel gear makes contact with a conical surface of the third planetary bevel gear and meanwhile a conical surface of the fourth bevel gear makes contact with a conical surface of the fourth planetary bevel gear; the third bevel gear is movably connected with the fourth bevel gear;
the first inner planetary gear set and the second inner planetary gear set are respectively movably connected with the rotary arm; the first outer planetary gear is fixedly connected with the second outer planetary gear; the first outer planetary gear, the second outer planetary gear and the rotary arm are movably connected with the planet carrier through the planet shaft; the first outer planetary gear is engaged with the first inner planetary gear; the second outer planetary gear is engaged with the second inner planetary gear;
the first planetary bevel gear, the first inner planetary gear and the second planetary bevel gear are adjacently arranged in sequence and mutually connected; or alternatively, the first planetary bevel gear, the second planetary bevel gear and the first inner planetary gear are adjacently arranged in sequence and mutually connected; or alternatively, the first inner planetary gear, the first planetary bevel gear and the second planetary bevel gear are adjacently arranged in sequence and mutually connected;
the third planetary bevel gear, the second inner planetary gear and the fourth planetary bevel gear are adjacently arranged in sequence and mutually connected; or alternatively, the third planetary bevel gear, the fourth planetary bevel gear and the second inner planetary gear are adjacently arranged in sequence and mutually connected; or alternatively, the second inner planetary gear, the third planetary bevel gear and the fourth planetary bevel gear are adjacently arranged in sequence and mutually connected.

9. The planetary friction type CVT mechanism according to claim 8, wherein the planetary friction type CVT mechanism further comprises a first regulator and a second regulator; the first bevel gear, the first regulator and the second bevel gear are connected with each other in sequence; and the third bevel gear, the second regulator and the fourth bevel gear are connected with each other in sequence.

10. The planetary friction type CVT mechanism according to claim 9, wherein the planetary friction type CVT mechanism further comprises a second ring gear, a second planet carrier, a second sun gear and at least one second planetary gear; the second planetary gear is movably connected with the second planet carrier and respectively engaged with the second sun gear and the second ring gear; the second ring gear and the second planet carrier are fixedly connected with the transmission unit, the sun gear set or the planet carrier; or alternatively, the second ring gear and the second sun gear are fixedly connected with the transmission unit, the sun gear set or the planet carrier; or alternatively, the second planet carrier and the second sun gear are fixedly connected with the transmission unit, the sun gear set or the planet carrier.

11. The planetary friction type CVT mechanism according to claim 10, wherein the planetary friction type CVT mechanism further comprises a third ring gear, a third planet carrier, a third sun gear and at least one third planetary gear; the third planetary gear is movably connected with the third planet carrier and respectively engaged with the third sun gear and the third ring gear; the third ring gear and the third planet carrier are fixedly connected with the second ring gear, the second sun gear or the second planet carrier; or alternatively, the third ring gear and the third sun gear are fixedly connected with the second ring gear, the second sun gear or the second planet carrier; or alternatively, the third planet carrier and the third sun gear are fixedly connected with the second ring gear, the second sun gear or the second planet carrier.
